# EUROPEAN PATENT SPECIFICATION

(11) **EP 2 629 645 B1**
(45) Date of publication and mention of the grant of the patent: **26.12.2018**
(21) Application number: 11773224.8
(22) Date of filing: 12.10.2011
(51) Int. Cl.: A47B 88/493, G02B 6/44

(54) **IMPROVEMENTS IN AND RELATING TO TELESCOPIC DOUBLE SLIDE RAILS**
VERBESSERUNGEN AN UND IM ZUSAMMENHANG MIT TELESKOPISCHEN DOPPELLAUFSCHIENEN
AMÉLIORATIONS APPORTÉES À DES GLISSIÈRES DOUBLES TÉLESCOPIQUES

(30) Priority: 18.10.2010 IN 3053CH2010
(43) Date of publication of application: 28.08.2013
(73) Proprietor: TE Connectivity India Private Limited, Bangalore 560048 (IN); CommScope Connectivity Belgium BVBA, 3010 Kessel-Lo (BE)
(72) Inventor: HEBBAR, Sudhir, Bangalore 560034 (IN); GEENS, Johan, B-3380 Bunsbeek (BE)
(74) Representative: Grünecker Patent- und Rechtsanwälte PartG mbB
(86) International application number: PCT/EP2011/067803
(87) International publication number: WO 2012/052332

(56) References cited:
- EP-A1- 0 620 993
- WO-A1-2005/026800
- US-A- 2 719 772

## Description

The present invention relates in general to slide rails and slide rail assemblies and in particular to an improved telescopic double slide rail assembly.

Slide rails have been known for several years and in its basic single slide form consists of two inter-engaging linear guide rails one of which is typically fixed while the other slides within the channel defined by the fixed guide. Slide rails are usually formed by precision rolling of steel plate. They are usually compact and easy to install and are suitable for various applications such as, for example, vehicle seats.

From the single slide rail there has been developed the double slide rail which in general consists of two single slide rails mounted together.

US Patent No. 4811925 discloses a slide rail which comprises a movable rail adapted for connection to a seat, said movable rail including a U-shaped lower portion; upper and lower sliders disposed on the top and bottom surfaces, respectively, of a lower flange forming part of the lower portion of said movable rail; and a substantially square shaped fixed rail adapted for fastening to the floor of a vehicle, said lower flange being positioned in said fixed rail, together with said upper and lower sliders, in such a way that said movable rail can be slidingly moved back and forth, wherein said upper slider, which is formed of a material having a desired elasticity, is provided on its top and bottom surfaces with a number of vertically alternating projections, together with projections on its two side surfaces, and said upper slider is also provided with slits extending from said top to said bottom surface and respectively disposed inwardly of said projections on said side surfaces.

According to US Patent No. 4730804, a seat slide rail structure comprises a lower rail having a channel member with a substantially C-shaped cross-section fixedly attached to a floor surface and having an open side end; a slider, fixedly secured to a seat, having a vertical portion opposing the open side end of the lower rail and combined with the lower rail in axially slidable manner by way of a bearing member; and a lock member fixedly secured to a lock lever shaft which is in turn rotatably supported by the slider and adapted to be rotated by an actuating means is disclosed.

The prior art double slide rail can also be exemplified by the assembly of United States Patent No. 4483504 according to which there is provided a slide rail assembly for a vehicle seat comprising two pairs of guide rails arranged in spaced parallel relationship, the two rails of each pair being in sliding engagement with one another, one rail of each pair being arranged to be connected to a vehicle seat and to act as a guided rail, the other rail of each pair being arranged to be connected to the vehicle floor and to act as a guiding rail, the guiding rail and the guided rail of each pair being of similar cross-sectional shape, and having a U-shaped portion and a flanged portion, the flanged portion of the guiding rail engaging in the U-shaped portion of the guided rail and the flanged portion of the guided rail engaging in the U-shaped portion of the guiding rail.

EP 0 620 993 A1 shows a telescopic double slide rail for the use in furniture, wherein a locking element locks a middle part of the rail to one of the outer parts in a first step and subsequently to the other one of the outer parts in a second step.

US 2,719,772 shows movable refrigerator shelves.

The present document shows the provision of an arrangement for the sliding of trays for optical fibres in an optical fibre distribution frame. Unfortunately, if a certain type of conventional double sliding rail assembly is employed for this purpose, it faces severe limitations with reference to the height and width of the tray. In fact, if this conventional double sliding rail were to be employed, there would be only two positions in which the optical fibre tray could be mounted.

The first of these would be to have the tray mounted at the side of the inner rail of the double slide rail which means that the maximum width permissible would be exceeded. Alternatively, the tray could be mounted on top of the inner rail of the double slide rail which results in the maximum height permissible being exceeded.

The solution which the present document offers resides in a novel construction of the double slide rail assembly. The outer slide rail is still mounted in the vertical position. However, the inner rail is mounted in the horizontal position. This construction is achieved by the provision of an intermediate L-shaped support member which enables the tray to be mounted on top of the inner rail of the double slide rail and the total height is reduced as compared to the alternative embodiment referred to above.

Accordingly, the present document provides a telescopic double slide rail particularly, but not essentially, for the support of slidable trays, which comprises two slide rails, each slide rail consisting of a pair of channels in sliding engagement with each other, one channel of each rail being fixable to an external retaining means and the other channel of each rail being supported by an L-shaped support member interposed between the two slide rails, said L-shaped support member and the channels fixed thereto being adapted to move relative to the fixable channels, whereby the inner slide rail is disposed horizontally and the outer slide rail is disposed vertically.

It is the object of the invention to provide a solution with a simple design. This is achieved by a telescopic double slide rail according to claim 1.

According to a preferred embodiment, the external retaining means is an external housing within which said double slide rail is mounted, the fixable channels of each slide rail being rigidly connected to said external housing whereby the inner slide rail is disposed horizontally between the external housing and the L-shaped support member and the outer slide rail is disposed vertically between the L-shaped support member and the external housing.

The invention will now be described in greater detail with reference to and as illustrated in the accompanying drawings in which:
Figure 1 represents an isometric view of a single slide rail according to the prior art; Figure 2 represents an isometric view of a double slide rail according to the prior art;
Figure 3 shows a cross-section of another embodiment of a prior art double slide rail mounted within a housing and slidable therein;
Figure 4 shows a cross-section of the mounting of the telescopic double sliding rail according to the present invention;
Figure 5 shows in isolation the intermediate L-shaped member for mounting the inner portion of the slide rail in horizontal position;
Figure 6 illustrates an isometric view of a tray for optical fibres having left and right frame walls and provided on either side with a double slide rail assembly according to the present invention;
Figure 7 illustrates a view from below of the same combination of tray and double slide rail assemblies as shown in Figure 6;
Figure 8 illustrates a view similar to Figure 6 but with the double slide rails extended thereby locating the tray at a position outside the housing; and
Figure 9 illustrates a view similar to Figure 8 but viewed from below.

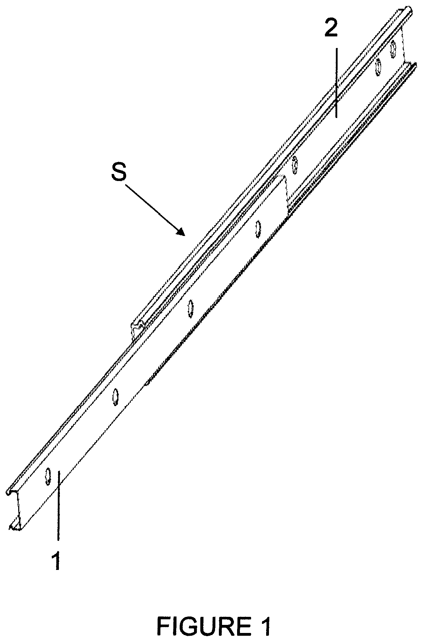

The single slide rail S of the prior art shown in Figure 1 of the drawings consists of an inner channel member 1 which is typically fixed, and an outer channel member 2 slidable in the member 1. Each of the channel members 1 and 2 is of approximate C-shaped cross-section, said channels being adapted to interlock with each other in linear sliding relationship.

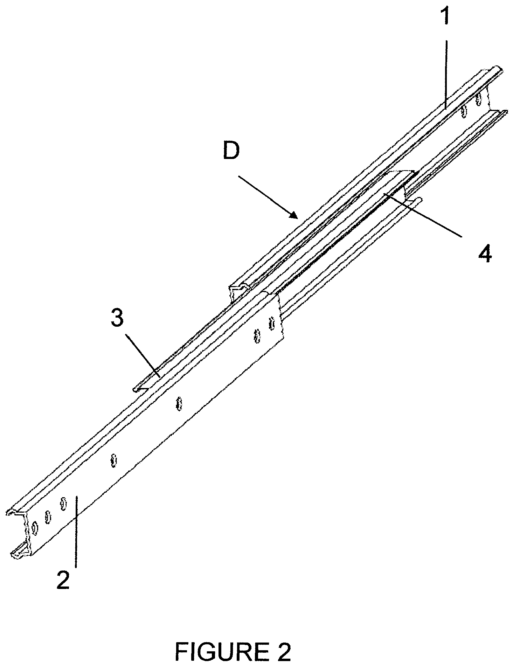

The prior art double slide rail D shown in Figure 2 in general consists of a typically fixed inner channel 1 and an outer channel 2. The channels 1 and 2 are interconnected by interacting sliding channel members 3, 4, also roughly C-shaped in cross-section. The interacting sliding channel members 3, 4 are connected to each other by any suitable connecting means such as rivets, bolts and nuts. The channel members 1 and 3 constitute the inner rail and channel members 2 and 4 constitute the outer rail of double slide rail D.

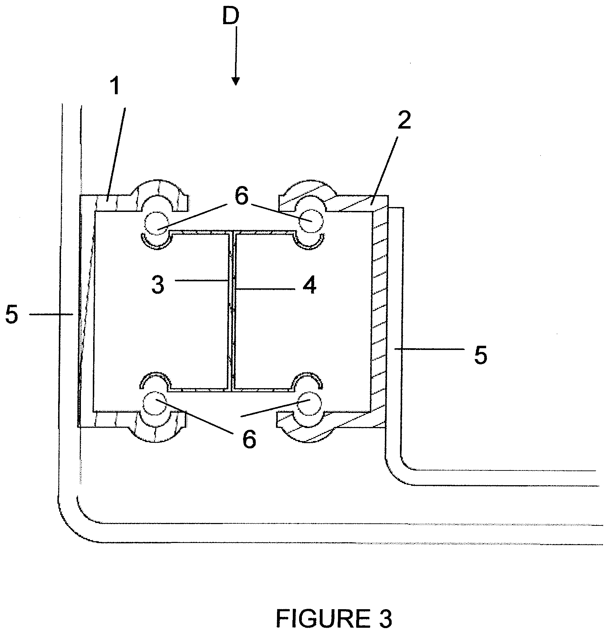

Figure 3 identifies best the problems in attempting to employ the prior art double sliding rail with respect to trays for optical fibres. This figure shows in cross section a double slide rail D mounted within a housing 5. Both channels 1, 3 and 2, 4 are mounted in the vertical position and sliding thereof is facilitated by means of a plurality of ball bearings 6 which are likewise positioned vertically one above the other. If a conventional double sliding rail were to be employed, there would be only two positions in which the optical fibre tray could be mounted. The first of these would have the tray mounted at the side of the inner channels 1 and 3 of the double slide rail D which means that the maximum width permissible would be exceeded. Alternatively, the tray could be mounted on top of the inner channels 1 and 3 of the double slide rail D which would result in the maximum height permissible being exceeded.

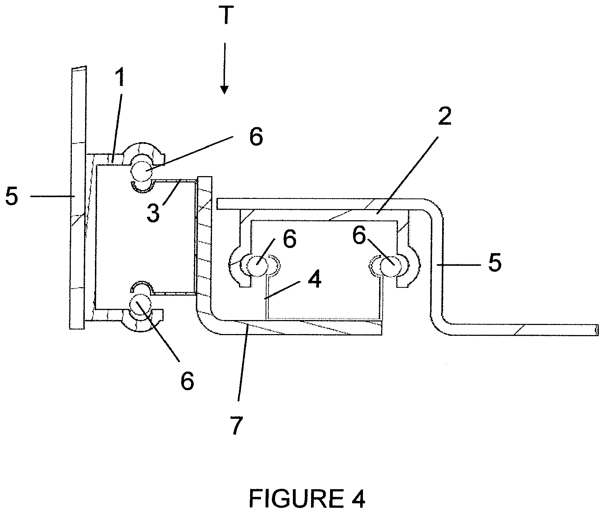

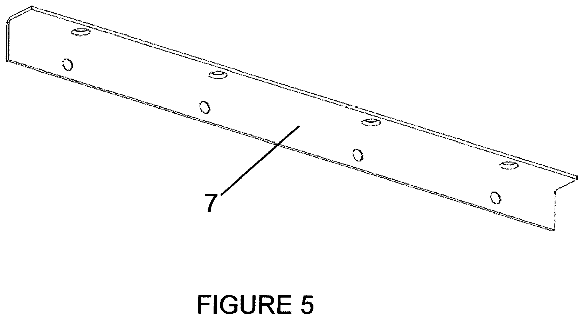

The solution to the problems can be resolved by the construction illustrated in Figure 4 which shows in cross-section the mounting of the telescopic double slide rail assembly T of the present invention. As shown in this figure, the outer rail formed by channel members 2, 4 of the double slide rail T is still mounted in the vertical position. On the other hand, the inner rail formed by channel members 1, 3 of the double slide rail T is mounted in the horizontal position by means of the inter position of an L-shaped support member 7 to which channel member 3 of the inner rail and channel member 4 of the outer rail are connected. These channel members 3 and 4 and the L-shaped support member are adapted to move in sliding linear relationship by means of an arrangement of appropriate ball bearings 6. The support member 7 is shown in isolation in Figure 5.

As a result of this novel construction, the tray for optical fibres can be mounted on the upper end of the outer rail formed by channel members 2, 4 of the double slide rail T whereby the total height is substantially reduced. To the applicants' knowledge, no similar constructions with respect to double slide rails have ever been disclosed.

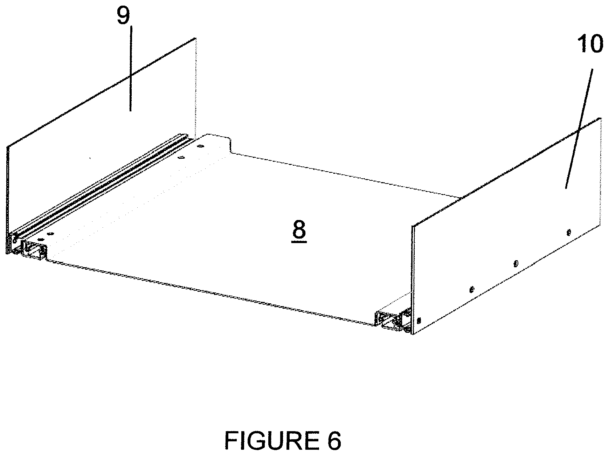

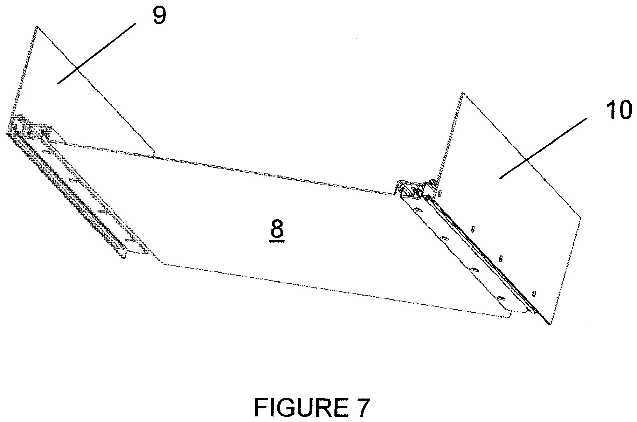

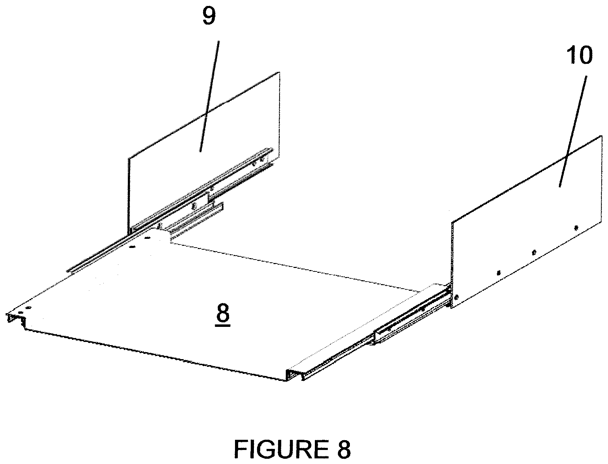

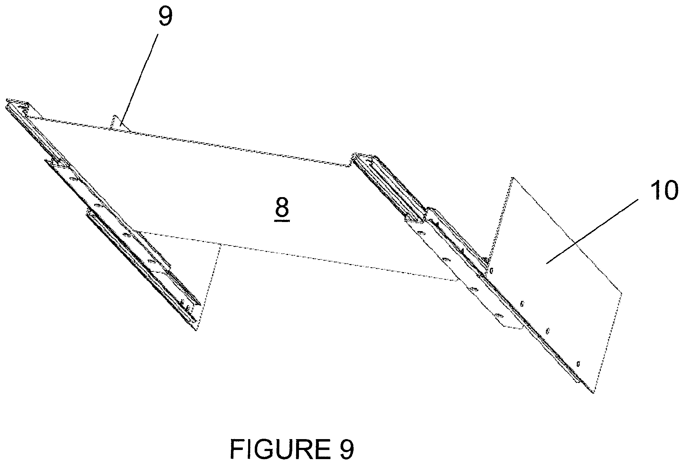

Figures 6 to 9 of the drawings show views from a plurality of positions or angles of the combination of the improved double slide rail assembly T of the present invention with a tray 8 for optical fibres having left and right frame walls 9, 10 provided on either side thereof.

The invention comprises a telescope double slide rail T particularly, but not essentially, for the support of slidable tray 8 substantially as herein described with reference to and as illustrated in the accompanying drawings.

It will be appreciated that other embodiments of the invention are possible without departing from the scope of the invention which is defined in the claims that follow.

## Claims

1. A telescopic double slide rail (T) particularly, but not essentially, for the support of slidable trays (8), which comprises two slide rails, each slide rail consisting of a pair of channels (1, 2, 3, 4) in sliding engagement with each other, each of the channels having a substantially C-shaped cross-section, one channel (1, 2) of each rail being fixable to an external retaining means and the other channel (3, 4) of each rail being supported by and connected to an L-shaped support member (7) interposed between the two slide rails, said L-shaped support member (7) and the channels (3, 4) fixed thereto being adapted to move relative to the fixable channels (1, 2), whereby the inner slide rail is disposed horizontally and the outer slide rail is disposed vertically.

2. A telescopic double slide rail (T) as claimed in claim 1 wherein said external retaining means is an external housing (5) within which said double slide rail is mounted, the fixable channels (1, 2) of each slide rail being rigidly connected to said external housing (5) whereby the inner slide rail is disposed horizontally between the external housing (5) and the L-shaped support member (7) and the outer slide rail is disposed vertically between the L-shaped support member (7) and the external housing (5).

3. A telescopic double slide rail (T) as claimed in claim 1 or 2 wherein said rails are formed of precision rolled steel plate.

4. The use of a telescopic double slide rail (T) as claimed in any one of claims 1 to 3 support trays (8) for optical fibres.

5. An optical fibre distribution frame comprising a telescopic double slide rail (T) as claimed in one of claims 1 to 3.

6. An optical fibre distribution frame as claimed in claim 5 wherein said optical fibre distribution frame constitutes said external housing (5) for the support of said telescopic double slide rail (T).

## Patentansprüche

1. Teleskop-Doppel-Gleitschiene (T), insbesondere, jedoch nicht im Wesentlichen, für die Lagerung verschiebbarer Einsätze (8), die zwei Gleitschienen umfasst, wobei jede Gleitschiene aus einem Paar Profile (1, 2, 3, 4) besteht, die gleitend in Eingriff miteinander sind, und jedes der Profile einen im Wesentlichen C-förmigen Querschnitt hat, ein Profil (1, 2) jeder Schiene an einer äußeren Halteeinrichtung befestigt werden kann und das andere Profil (3, 4) jeder Schiene von einem L-förmigen Trageelement (7), das zwischen den zwei Gleitschienen angeordnet ist, getragen wird und mit ihm verbunden ist, wobei das L-förmige Trageelement (7) und die daran befestigten Profile (3, 4) so eingerichtet sind, dass sie sich relativ zu den zu befestigenden Profilen (1, 2) bewegen und dabei die innere Gleitschiene horizontal angeordnet ist und die äußere Gleitschiene vertikal angeordnet ist.

2. Teleskop-Doppel-Gleitschiene (T) nach Anspruch 1, wobei die äußere Halteeinrichtung ein äußeres Gehäuse (5) ist, in dem die Doppel-Gleitschiene angebracht ist, die zu befestigenden Profile (1, 2) jeder Gleitschiene starr mit dem äußeren Gehäuse (5) verbunden sind und dabei die innere Gleitschiene horizontal zwischen dem äußeren Gehäuse (5) und dem L-förmigen Trageelement (7) angeordnet ist und die äußere Gleitschiene vertikal zwischen dem L-förmigen Trageelement (7) und dem äußeren Gehäuse (5) angeordnet ist.

3. Teleskop-Doppel-Gleitschiene (T) nach Anspruch 1 oder 2, wobei die Schienen aus präzisionsgewalztem Stahlblech bestehen.

4. Einsatz einer Teleskop-Doppel-Gleitschiene (T) nach einem der Ansprüche 1 bis 3 bei Trage-Einsätzen (8) für Lichtleitfasern.

5. Verteilergestell für Lichtleitfasern, das eine Teleskop-Doppel-Gleitschiene (T) nach einem der Ansprüche 1 bis 3 umfasst.

6. Verteilergestell für Lichtleitfasern nach Anspruch 5, wobei das Verteilergestell für Lichtleitfasern das äußere Gehäuse (5) für die Lagerung der Teleskop-Doppel-Gleitschiene (T) bildet.

## Revendications

1. Rail télescopique coulissant double (T) particulièrement, mais non essentiellement, destiné au support de plateaux pouvant coulisser (8), qui comprend deux rails coulissants, chaque rail coulissant constitué d'une paire de canaux (1, 2, 3, 4) en engagement coulissant l'un avec l'autre, chacun des canaux ayant une section transversale sensiblement en forme de C, un canal (1, 2) de chaque rail pouvant être fixé à un moyen de retenue externe et l'autre canal (3, 4) de chaque rail étant supporté par et relié à un élément de support en forme de L (7) interposé entre les deux rails coulissants, ledit élément de support en forme de L (7) et les canaux (3, 4) fixés dessus étant adaptés pour se déplacer par rapport aux canaux pouvant être fixés (1, 2), moyennant quoi le rail coulissant interne est disposé horizontalement et le rail coulissant externe est disposé verticalement.

2. Rail télescopique coulissant double (T) tel que revendiqué selon la revendication 1, ledit moyen de retenue externe étant un logement externe (5) à l'intérieur duquel ledit rail coulissant double est monté, les canaux pouvant être fixés (1, 2) de chaque rail coulissant étant reliés de manière rigide audit logement externe (5) moyennant quoi le rail coulissant interne est disposé horizontalement entre le logement externe (5) et l'élément de support en forme de L (7) et le rail coulissant externe est disposé verticalement entre l'élément de support en forme de L (7) et le logement externe (5).

3. Rail télescopique coulissant double (T) tel que revendiqué selon la revendication 1 ou 2, lesdits rails étant formés d'une plaque en acier laminée de précision.

4. Utilisation d'un rail télescopique coulissant double (T) tel que revendiqué selon l'une quelconque des revendications 1 à 3 de plateaux de support (8) pour fibres optiques.

5. Châssis de distribution de fibre optique comprenant un rail télescopique coulissant double (T) tel que revendiqué selon l'une des revendications 1 à 3.

6. Châssis de distribution de fibre optique tel que revendiqué selon la revendication 5, ledit châssis de distribution de fibre optique constituant ledit logement externe (5) pour le support dudit rail télescopique coulissant double (T).
